# EUROPÄISCHE PATENTANMELDUNG

(11) **EP 0 615 987 A2**
(43) Veröffentlichungstag der Anmeldung: **21.09.1994**
(21) Anmeldenummer: 94103420.9
(22) Anmeldetag: 07.03.1994
(51) Int. Cl.: C08G 16/00, C08G 8/28, C09D 11/10

(54) **Phenolharz-modifizierte Naturharzsäureester, Verfahren zu ihrer Herstellung und ihre Verwendung als Bindemittelharze in Druckfarben**

(30) Priorität: 15.03.1993 DE 4308108
(71) Anmelder: HOECHST AKTIENGESELLSCHAFT, D-65926 Frankfurt am Main (DE)
(72) Erfinder: Bender, Albert, Dr., D-55130 Mainz (DE)

(57) **Zusammenfassung**

Phenolharz-modifizierte Naturharzsäureester erhalten durch Umsetzung von
A) Naturharzen oder Naturharzsäuren,
B) einkernigen oder mehrkernigen alkylolisierbaren Phenolen,
C) Aldehyden oder Aldehydacetalen,
D) aliphatischen, cycloaliphatischen oder araliphatischen Polyolen,
E) Calcium- und/oder Zinkverbindungen und
F) gegebenenfalls ethylenisch ungesättigten Kohlenwasserstoffharzen,
bei einer Temperatur von 100 bis 250 °C und anschließende azeotrope Abdestillation des Wassers mittels eines Schleppmittels bei 200 bis 300 °C.

## Beschreibung

Die Erfindung betrifft neue Phenolharz-modifizierte Naturharzsäureester, die hohe Lösungsviskositäten in Toluol aufweisen sowie ein Verfahren zu ihrer Herstellung aus Naturharzen, Phenolen, Aldehyden, Veresterungs- und Modifizierungsmitteln, wobei sich diese Verfahren durch kurze Reaktionszeiten auszeichnet. Die neuen Verbindungen werden als Bindemittelharze für Druckfarben für den Illustrationstiefdruck mit Toluol verwendet, die festkörperarm formuliert werden können.

Druckfarben für den Illustrationstiefdruck mit Toluol können bekanntlich durch Pigmentieren eines Firnisses hergestellt werden, wobei der Firnis durch Auflösen geeigneter Bindemittelharze in Toluol unter Zusatz verschiedener Hilfsstoffe gewonnen werden kann. Als Hilfsstoffe kommen beispielsweise Fließregulatoren, Wachse und Pigmentbenetzungsmittel und gegebenenfalls weitere Additive zur Verbesserung der Bindemitteleigenschatten, beispielsweise des Glanzes und der Scheuerfestigkeit des Druckfilms, in Frage. Das Bindemittelharz hat dabei die Aufgabe, das Pigment auf dem Bedruckstoff zu verankern. Die Entwicklung besonders schnell laufender Druckmaschinen und der Trend, neben gestrichenen Papieren in erhöhtem Maß auch nichtgestrichene Papiere mit erhöhter Saugfähigkeit zu bedrucken, stellt besonders hohe Anforderungen an die Qualität dieser Bindemittelharze. Insbesondere müssen sie dem Farbfilm einen guten Stand auf dem Bedruckstoff verleihen. Keinesfalls sollen Bindemittelharze zusammen mit Pigment in das Innere diffundieren, da dies mit Glanzverlust und verschlechterter Scheuerfestigkeit einhergeht. Es ist bekannt, daß Bindemittelharze mit hohem Molekulargewicht von Vorteil sind, da sie ein vermindertes Wegschlageverhalten in den Bedruckstoff aufweisen. Da sich zudem die erforderliche Druckviskosität mit einem im Vergleich zu niedrigviskosen Bindemittelharzen reduzierten Festkörpergehalt einstellen läßt, wird die Wirtschaftlichkeit der Farbformulierung verbessert.

Werden Bindemittelharze auf Naturharzsäure-Basis verwendet, so müssen sie zum Molekulargewichtsaufbau in geeigneter Weise modifiziert werden. Bekanntlich ist es nicht ausreichend, die Naturharzsäuren nur mit Polyolen umzusetzen, da die erhaltenen Molekulargewichte für die vorteilhafte Anwendung noch zu niedrig sind. Eine Erhöhung kann jedoch erreicht werden, wenn zusätzlich mit Phenol-Aldehyd-Kondensationsprodukten und mit α,β-ethylenisch ungesättigten Carbonsäuren oder deren Anhydriden, wie beispielsweise Maleinsäureanhydrid oder Fumarsäure, modifiziert wird. Dabei werden bei der Umsetzung mit dem Naturharz die darin enthaltenden monofunktionellen Säuren, wie z.B. die Pimar-, Abietin- und Neoabietinsäure, in eine Säure mit drei Säurefunktionen, die sogenannte Maleopimarsäure, umgewandelt. Diese ist nun für die Vernetzung mit Polyolen, die zu hohen Molekulargewichten führt, besonders gut geeignet. Voraussetzung für den Molekulargewichtsaufbau ist allerdings eine möglichst weitgehende Umsetzung der Säuregruppen. Typischerweise werden Säurezahlen angestrebt, die unter 40 mg KOH/g Harz liegen. Bekanntermaßen sind für diese Polykondensationsreaktion dann relativ lange Reaktionszeiten bei hohen Temperaturen erforderlich, was für die technische Herstellung wegen der geringen Zeitausbeute nachteilig ist. Solche Harze aus Kolophonium, Fumarsäure, Diphenylolpropan, Formaldehyd und Pentaerythrit sind beispielsweise aus der Patentschrift US 4,857,624 bekanntgeworden.

Der vorliegenden Erfindung lag somit die Aufgabe zugrunde, Kunstharze verfügbar zu machen, die ohne die Mitverwendung von α,β-ethylenisch ungesättigten Carbonsäure-Derivaten hergestellt werden, trotzdem ein hohes Molekulargewicht und daher hohe Lösungsviskositäten in Toluol aufweisen und eine nur kurze Reaktionszeit zu ihrer Herstellung benötigen.

Es wurde nun überraschenderweise gefunden, daß man Kunstharze, die diese Eigenschaften besitzen und die sich als Bindemittelharze zur Herstellung von Druckfarben für den Illustrationstiefdruck mit Toluol eignen, dadurch erhalten kann, daß man bei der Herstellung von Druckfarbenharzen auf der Basis von Phenolharz-modifizierten Naturharzsäureestern als Katalysator für die Resolbildung aus Phenolen und Aldehyden in der Naturharzschmelze sowie für die Naturharzsäureveresterung Calcium- und/oder Zinkverbindungen verwendet und das bei der Kondensationsreaktion und der Naturharzsäureveresterung entstehende Wasser durch azeotrope Destillation unter Mitverwendung eines zur Azeotropbildung mit Wasser befähigten inerten organischen Lösungsmittels entfernt. Die hierbei resultierenden Kunstharze zeigen hohe Lösungsviskositäten in Toluol und lassen sich in wesentlich kürzerer Reaktionszeit als vergleichbare, mit α,β-ethylenisch ungesättigten Carbonsäurederivaten modifizierte, herstellen.

Gegenstand der Erfindung sind daher Phenolharz-modifizierte Naturharzsäureester, die hohe Lösungsviskositäten in Toluol aufweisen und sich in kurzen Reaktionszeiten herstellen lassen durch Umsetzung von mindestens jeweils einer Verbindung aus den Substanzgruppen
A) Naturharze oder Naturharzsäuren,
B) einkernigen oder mehrkernige alkylolisierbare Phenolen
C) Aldehyde oder Aldehydacetale und
D) aliphatische, cyclo-aliphatische oder aromatisch-aliphatische Alkohole mit mindestens zwei Hydroxylgruppen
in Gegenwart von
E) Calcium- und/oder Zinkverbindungen
sowie gegebenenfalls weiteren Verbindungen aus der Substanzgruppe
F) ethylenisch ungesättigte Kohlenwasserstoffharze
bei einer Temperatur von 100 bis 250 °C und anschließende azeotrope Abdestillation des Wassers mittels eines Schleppmittels bei 200 bis 300 °C.

Bei der Herstellung der neuen Phenolharz-modifizierten Naturharzsäureester ist es besonders wichtig, daß in der ersten Verfahrensstufe Calcium- und/oder Zinkverbindungen als Kondensationskatalysatoren verwendet und in der zweiten Verfahrensstufe ein bei der Reaktionstemperatur zur azeotropen Destillation von Wasser befähigtes inertes organisches Lösungsmittel als Schleppmittel zur azeotropen Destillation des Reaktionswassers verwendet und das Reaktionswasser durch kontinuierliche azeotrope Destillation aus dem Reaktionsgemisch ausgekreist und eliminiert wird. Nur die Kombination beider Maßnahmen führt überraschenderweise zur Molekulargewichts- und Viskositätssteigerung des Bindemittelharzes sowie zur Verkürzung dessen Reaktionszeit, wogegen bei der Einzelanwendung von jeweils nur einer dieser Maßnahmen die erfindungsgemäße Aufgabe nicht gelöst wird. Bei der kombinierten erfindungsgemäßen Anwendung der Azeotropdestillation unter Verwendung von Calcium- und/oder Zinkverbindungen wird demzufolge offensichtlich ein synergistischer Effekt erzielt, der weder bekannt noch vorhersehbar und deshalb in hohem Maße überraschend und unerwartet war.

Der Anteil der einzelnen Komponenten, einschließlich des Schleppmittels, bezogen auf die Gesamtmenge aller Komponenten, beträgt 30 bis 95 Gew.-%, vorzugsweise 40 bis 90 Gew.-%, insbesondere 50 bis 80 Gew.-%, Naturharze oder Naturharzsäuren aus der Substanzgruppe A),
1 bis 45 Gew.-%, vorzugsweise 5 bis 30 Gew.-%, insbesondere 10 bis 25 Gew.-%, phenolische Komponenten aus der Substanzgruppe B) und 2 bis 20 Gew.-%, vorzugsweise 3 bis 10 Gew.-%, insbesondere 5 bis 8 Gew.-%, Aldehydkomponenten aus der Substanzgruppe C), oder gegebenenfalls anstelle der Komponenten aus den Substanzgruppen B) und C) oder anteilig mit diesen vorzugsweise
bis zu 65 Gew.-% von aus Verbindungen der Substanzgruppen B) und C) separat hergestellten Kondensationsprodukten in einer Phenolresolform,
1 bis 20 Gew.-%, vorzugsweise 3 bis 15 Gew.-%, insbesondere 4 bis 10 Gew.-%, Polyolkomponenten aus der Substanzgruppe D),
0,01 bis 5 Gew.-%, vorzugsweise 0,1 bis 2 Gew.-%, insbesondere 0,3 bis 1,5 Gew.-%, berechnet als CaO und/oder ZnO, Calcium- und/oder Zinkverbindungen aus der Substanzgruppe E),
0 bis 30 Gew.-%, vorzugsweise 1 bis 25 Gew.-%, insbesondere 2 bis 10 Gew.-%, Kohlenwasserstoffharzkomponenten aus der Substanzgruppe F),
0,01 bis 20 Gew.-%, vorzugsweise 3 bis 15 Gew.-%, insbesondere 4 bis 10 Gew.-%, inertes Schleppmittel.

Als Verbindungen der Substanzgruppen A) bis F) kommen vorzugsweise in Frage:
A) Naturharze oder Naturharzsäuren, insbesondere Kolophonium (Baumharz), Wurzelharz, Tallharz, Naturharze, die teilweise hydriert, disproportioniert oder dimerisiert sind. Die Harze bzw. Harzsäuren zeigen gegebenenfalls eine Bromzahl (= aufgenommene Menge Brom in g pro 100 g Harz) im Bereich von vorzugsweise 200 bis 280 und eine Säurezahl im Bereich von vorzugsweise 100 bis 200 mg KOH/g Harz.
B) Einkernige oder mehrkernige Phenole, vorzugsweise solche, die gegenüber Oxoverbindungen mehrfachfunktionell sind, insbesondere Phenol, (C₁-C₁₂)Alkylphenole, Aryl- oder Aralkylphenole, Kresole, 1,3,5-Xylenole, lsopropyl-, p-tert.-Butyl-, Amyl-, Oktyl-, Nonylphenol, Diphenylolpropan, Phenylphenol, Cumylphenol sowie Additionsprodukte aus Phenolen und ethylenisch ungesättigten Monomeren, vorzugsweise Styrol, α-Methylstyrol, α-Chlorstyrol, Vinyltoluol, Cyclopentadien. Bevorzugt sind tri- und tetrafunktionelle Phenole, bei denen mehr als zwei ortho- oder para-Stellungen zur phenolischen OH-Gruppe am Benzolring reaktiv und zur Aldehydaddition befähigt sind, beispielsweise Phenol oder Diphenylolpropan. Auch mono- oder bifunktionelle Phenole, beispielsweise Alkyl- oder Aralkylphenole, beispielsweise Nonylphenol oder Octylphenol, sind verwendbar.
   Mit den besonders bevorzugten tri- und tetrafunktionellen Phenolen lassen sich sehr vorteilhaft die gewünschten Verträglichkeiten der erfindungsgemäßen Harze mit den für den Illustrationstiefdruck mit Toluol verwendeten Pigmenten erzielen. In gleicher Weise vorteilhaft wirken ferner die bekannten Umsetzungsprodukte aus trifunktionellen Phenolen mit ethylenisch ungesättigten Monomeren, so daß auch diese Umsetzungsprodukte bevorzugte Phenolkomponenten darstellen. Andererseits lassen sich mit den mono- oder bifunktionellen Phenolen niedere Schmelzviskositäten der Harzmischungen bei deren Herstellung einstellen. Ihre alleinige Verwendung ist jedoch nicht bevorzugt, da sie die Pigmentbenetzung beeinträchtigen können. Sie werden stattdessen in Gemischen zusammen mit tri- oder tetrafunktionellen Phenolen eingesetzt, wobei ihr Anteil bis zu 90 Gew.-%, bezogen auf die Gesamtmenge der eingesetzten Phenole, betragen kann.
C) Aldehyde oder Aldehydacetale, vorzugsweise aliphatische (C₁-C₇)-Aldehyde, insbesondere Formaldehyd in seinen verschiedenen monomeren, oligomeren und polymeren Formen, Acetaldehyd, Butyraldehyd, lsobutyraldehyd, ferner Benzaldehyd, Furfural, Glyoxal.
   Das Molverhältnis der Phenolkomponente aus B) zur Aldehydkomponente aus C) kann für die Phenolresolbildung in weiten Grenzen variiert werden und liegt vorzugsweise im Bereich von 1 : 0,9 bis 1 : 4,5, insbesondere 1 : 1 bis 1 : 3,5. Überschüssiger oder nicht umgesetzter Aldehyd wird aus dem Reaktionsgemisch, vorzugsweise destillativ, entfernt. Durch die Natur und die Menge der verwendeten Ausgangskomponenten für die Phenolresolharzbildung läßt sich die Lösungsviskosität und die Pigmentbenetzung der als Endprodukte erhältlichen erfindungsgemäß hergestellten phenolharz-modifizierten Naturharzsäureester auf bequeme Art beeinflussen bzw. steuern, wobei der Anteil an Phenolharzkomponenten in dem Endprodukt vorzugsweise bis zu 65 Gew.-%, bezogen auf das Endprodukt betragen kann.
   Die Phenolresolharzbildung kann auch separat nach bekannten Methoden aus Phenol und Aldehyden und basischen Katalysatoren bei Temperaturen zwischen 50 und 160°C, vorzugsweise 60 bis 100°C, bei Normaldruck oder erhöhtem Druck im Autoklaven durchgeführt und das Produkt dann der erfindungsgemäßen Naturharz- bzw. Naturharzsäureschmelze anstelle entsprechender Mengen Phenolkomponenten aus der Substanzgruppe B) und Aldehydkomponenten aus der Substanzgruppe C) zugesetzt werden. Bevorzugt ist jedoch die Phenolresolharzbildung aus Phenolkomponenten und Aldehydkomponenten in situ in der Naturharz- bzw. Naturharzsäureschmelze.
D) Es sind alle aus der Polyesterharzherstellung bekannten und mehrere Hydroxylgruppen enthaltenden Verbindungen als Veresterungsmittel verwendbar, vorzugsweise polyfunktionelle Alkohole. Besonders bevorzugt sind Glycerin, Trimethylolpropan und Pentaerythrit.
E) Als Kondensationskatalysatoren sind zwingend Calcium- und/oder Zinkverbindungen erforderlich. Bevorzugt sind die Oxide, Hydroxide oder Salze von schwachen organischen Säuren, insbesondere Carbonate, Bicarbonate, Acetate, Formiate, Oxalate.
   In untergeordneten Anteilen von bis zu maximal 1/3-Äquivalent, bezogen auf die Äquivalentzahl der eingesetzten Calcium- und/oder Zinkverbindungen, können auch Magnesiumverbindungen mitverwendet werden. Bei alleiniger Verwendung der letzteren Verbindungen ohne Calcium- und/oder Zinkverbindungen können die bei der Harzherstellung durch Azeotropdestillation resultierenden Endprodukte Veränderungen erfahren, die nicht mehr zu erfindungsgemäßen Produkten führen. Beispielsweise können sie zu Produkten führen, die in Toluol eine zu schlechte Löslichkeit besitzen, oder die eine nur ungenügende Pigmentbenetzung der im Illustrationstiefdruck verwendeten Pigmente aufweisen. Diese Unterschiede in der Wirksamkeit der unterschiedlichen Metallverbindungen, die üblicherweise bei der Bindemittelharzherstellung für Druckfarben verwendet werden, und deren Einfluß auf den Aufbau der Polykondensate sind außerordentlich überraschend.
F) Als ethylenisch ungesättigte Kohlenwasserstoffharze eignen sich vorzugsweise solche, deren Makromoleküle lsopren-, Cyclopentadien-, Dicyclopentadien-, Cumaron-, lnden- sowie Styrol-Einheiten enthalten, wobei die Kohlenwasserstoffharze gegebenenfalls in Mengen von vorzugsweise bis zu 30 Gew.-%, bezogen auf das Endprodukt, mitverwendet werden. Es ist auch möglich, die Verbindungen der Substanzgruppe F) oder ihre Monomeren in Form von Copolymerisaten mit den Verbindungen der Substanzgruppe A) einzusetzen.

Die Herstellung der erfindungsgemäßen Produkte erfolgt in zwei Stufen. In der ersten Stufe wird eine Mischung der Komponenten A) bis E), gegebenenfalls zusammen mit Komponente F) bei einer Temperatur von 100 bis 250 °C, vorzugsweise 110 bis 160 °C umgesetzt, vorzugsweise bei einem Druck von 1 bis 10 bar, insbesondere 1 bis 5 bar.

In der zweiten Reaktionsstufe wird das entstandene Reaktionswasser mit einem inerten Schleppmittel azeotrop abdestilliert. Als inerte Schleppmittel, die bei der Herstellung erfindungsgemäßer Harze vorzugsweise in der Stufe 3) des erfindungsgemäßen Syntheseverfahrens zugesetzt werden und mit Wasser unter den Umsetzungsbedingungen Azeotrope bilden können, kommen vorzugsweise gesättigte aliphatische oder aromatische Kohlenwasserstoffe in Frage, deren Siedetemperaturen unter Normaldruck vorzugsweise oberhalb von 100 °C liegen, beispielsweise Alkane, insbesondere Hexan, Dekan, Gemische von aliphatischen Kohlenwasserstoffen, wie sie beispielsweise in Benzin vorliegen oder in entsprechenden Mineralölfraktionen, ferner vorzugsweise Toluol oder Xylol.

Das Schleppmittel wird vorzugsweise über ein Einleitungsrohr am Boden des Reaktionsgefäßes dem Reaktionsgemisch zugesetzt. Geringe Mengen Schleppmittel können bereits auch in der ersten Stufe des Syntheseverfahrens zugesetzt werden, um die Schmelzviskosität der Ausgangskomponenten zu erniedrigen. Vorzugsweise wird die gesamte Schleppmittelmenge spätestens beim Erreichen einer Reaktionstemperatur von 200°C zugesetzt.

Die Azeotropdestillation wird bei Temperaturen von 200 bis 300 °C, vorzugsweise 220 bis 270 °C, insbesondere 240 bis 260 °C und bei einem Druck von 1 bis 10 bar durchgeführt. Besonders bevorzugt ist die Ausführung bei Normaldruck.

Es ist besonders wichtig, daß mittels dieser Schleppmittel das bei der Kondensationsreaktion entstehende Reaktionswasser kontinuierlich und vollständig durch azeotrope Destillation aus dem Reaktionsgemisch entfernt wird, wobei das Schleppmittel vorzugsweise im Kreislauf geführt wird, und daß nach Beendigung der Wassereliminierung das Schleppmittel wieder aus dem Reaktionsgemisch abdestilliert wird. Falls diese Bedingung der fortlaufenden und ausschließlich azeotropen Auskreisung des Reaktionswassers nicht konsequent erfüllt wird, können die erwünschten Eigenschaften des Endproduktes sowie der Vorteil der Verkürzung der Reaktionszeit teilweise oder vollständig verloren gehen.

Bei dem Syntheseverfahren wird der Fortgang der Kondensationsreaktion anhand der Säurezahl des Reaktionsgemisches verfolgt. So kann die Säurezahl des Harzgemisches anfangs vorzugsweise bis zu 200 mg KOH/g Harz betragen, ermittelt nach den üblichen Methoden. Sie fällt mit fortschreitender Umsetzung unter Wasserabspaltung und azeotroper Wasserauskreisung fortlaufend ab und die Veresterungsreaktion wird solange fortgesetzt, bis die erfindungsgemäße Umsetzung das gewünschte Endstadium erreicht hat und die Säurezahl auf Werte von < 50, vorzugsweise < 40 mg KOH/g Harz abgesunken ist. Danach wird das Schleppmittel durch Destillation, zuletzt unter Vakuum, aus dem Reaktionsprodukt entfernt. Dies erfolgt im allgemeinen zunächst bei Normaldruck und am Ende unter Vakuum bei Drucken zwischen 1000 und 0,1 mbar, vorzugsweise 200 bis 50 mbar, und Temperaturen bis zu 300 °C, vorzugsweise bis zu 280 °C.

Die erfindungsgemäßen Harze können auch während oder vorzugsweise nach den eigentlichen erfindungsgemäßen Reaktionen weiter bearbeitet werden, indem zusätzliche Verbindungen hinzugefügt werden.

Es ist beispielsweise möglich, zur Optimierung angestrebter Lösungsviskositäten niedermolekulare Verbindungen, beispielsweise Kolophonium, Kolophoniumester, vegetabile Öle, oder Polymere, beispielsweise Phenolharze, Polyester, Alkydharze, Acrylpolymere, Polystyrol, modifizierte Kieselgele, modifizierte Cellulosederivate, und Mischungen davon, zuzusetzen.

Die Herstellung der erfindungsgemäßen Bindemittelharze durch Azeotropdestillation in Kombination mit Calcium- und/oder Zinkverbindungen als Kondensationskatalysatoren kann im Vergleich zum Verfahren des Standes der Technik eine Verzehnfachung des Molekulargewichts, eine Steigerung der Viskosität um das zwanzigfache und eine Halbierung der Reaktionszeit bewirken. Werden Bindemittelharze nach bekannten Verfahren durch Modifizieren mit α,β-ethylenisch ungesättigten Carbonsäure-Derivaten hergestellt, die vergleichbare anwendungstechnische Eigenschaften, wie beispielsweise Säurezahl, Molekinlargewicht und Viskosität wie die Bindemittelharze des erfindungsgemäßen Verfahrens aufweisen, so benötigen letztere zu ihrer Herstellung eine deutlich erniedrigte Reaktionszeit. Diese kann bis zu 50 % unter der der mit den Säure-Derivaten modifizierten Produkte liegen. Darüberhinaus ist es sogar möglich, mit Hilfe des erfindungsgemäßen Verfahrens Bindemittelharze mit noch höherer Viskosität, als sie jene Verbindungen aufweisen, in kürzerer Reaktionszeit als es dem bisherigen Stand der Technik entspricht, herzustellen. Diese Ergebnisse waren nicht vorhersehbar und sind deshalb außerordentlich überraschend. Die Herstellung der neuen erfindungsgemäßen Produkte im technischen Maßstab erweist sich somit als außerordentlich günstig, da sich sehr vorteilhafte Eigenschaften und Zeitausbeuten im Vergleich zum Stand der Technik ergeben.

Das Molekulargewicht der erfindungsgemäßen Harze kann durch Gelpermeationschromatographie der Harzlösungen in Tetrahydrofuran (THF) an Polystyrolgel in einem Permeationsmeßgerät nach bekannten Methoden ermittelt werden. Das Molekulargewicht (Gewichtsmittel M_{w}) der erfindungsgemäßen Harze liegt gemäß den erhaltenen Meßergebnisssen vorzugsweise bei Werten von M_{w} > 5000 und ist nach oben nicht kritisch begrenzt. Besonders bevorzugt liegen die Molekulargewichte M_{w} jedoch in einem mittleren Bereich zwischen 5000 und 100000, insbesondere 15000 bis 60000.

Zur Bestimmung der Viskositäten werden beispielsweise die 25 gew.-%igen toluolischen Lösungen mit einem üblichen Rotationsviskosimeter bei 23 °C vermessen. Die Viskositäten liegen vorzugsweise in einem Bereich von 3 bis 100 mPa·s.

Weiterer Gegenstand der Erfindung ist die Verwendung der erfindungsgemäßen Harze als Bindemittelharze in Druckfarben für den Illustrationstiefdruck mit Toluol. Die erfindungsgemäßen Kunstharze zeigen in toluolischer Lösung hohe Viskositäten und weisen ausgezeichnete Verträglichkeiten mit anderen Bindemitteln, beispielsweise Naturharzsäureestern des Standes der Technik, Resinaten oder Kohlenwasserstoffharzen auf. Sie besitzen darüberhinaus ein ausgezeichnetes Benetzungsverhalten für die im Illustrationstiefdruck verwendeten Pigmente. Sie ermöglichen daher die Formulierung festkörperarmer Farben, vorzugsweise in Kombination mit weiteren Bindemittelharzen. Werden keine zu hohen Anforderungen an die Glanzentwicklung gestellt, ist es jedoch sogar möglich, die erfindungsgemäßen Harze als alleiniges Bindemittelharz einzusetzen, wobei sehr festkörperarme Farben entstehen. Dies bedeutet sowohl einen ökonomischen wie ökologischen Fortschritt, da die Farben wirtschaftlicher zu formulieren sind und beispielsweise beim Recycling von damit bedrucktem Papier weniger Harzabfall entsteht.

Die Toluoltiefdruckfarben werden nach den üblichen Methoden formuliert, wobei geeignete Bindemittelharze, wie beispielsweise Phenolharz-modifizierte Naturharzsäureester, Kohlenwasserstoffharze oder Resinate, in Toluol gelöst und dieser Firnis pigmentiert wird. Als Zuschlagstoffe können die sonst üblichen, beispielsweise Füllstoffe, wie Calciumcarbonat, oder grenzflächenaktive Mittel zur Verbesserung der Pigmentdispersion, wie Lecithin, oder Wachse zur Verbesserung der Scheuerfestigkeit, mitverwendet werden.

Die Erfindung wird durch die nachfolgenden Beispiele näher erläutert, die die Erfindung jedoch nicht einschränken.

### Vergleichsbeispiel 1

### Herstellung eines Bindemittelharzes ohne Maleinsäureanhydrid nach bekannten Verfahren, also ohne die Azeotropdestillation des Reaktionswassers, wobei ein niederviskoses Harz erhalten wird.

In einem heizbaren 2l-Mehrhalskolben mit Rührwerk, Thermometer, Tropftrichter, Rückflußkühler und Einfüllrohr werden unter einer Stickstoffatmosphäre 527 g handelsübliches Kolophonium, das auch als Naturharz oder Naturharzsäure bezeichnet wird, 58 g Nonylphenol, 63 g Diphenylolpropan und 48 g Glycerin geschmolzen. In die 100 °C heiße Schmelze werden sodann 8,8 g Calciumhydroxid, was einem Gehalt von 0,9 Gew.-% (berechnet als CaO) bezogen auf die Gesamteinwaage entspricht, suspendiert in 30 ml Xylol, getropft und dann 45 g Paraformaldehyd eingetragen. Dann wird die Mischung unter Rühren während 30 min homogenisiert. Dann wird die Heizung auf eine Temperatur von 130 °C geregelt, wobei Wasser im Rückflußkühler zu kondensieren beginnt. Nach 2 Stunden wird der Kühler durch einen absteigenden Kühler ersetzt und Wasser, Xylol und Harzöl abdestilliert. Dabei wird die Temperatur auf 250 °C gesteigert und der Fortgang der Reaktion anhand der Säurezahl des Produkts bestimmt. Sobald diese auf 25 mg KOH/g Harz gefallen ist, werden flüchtige Anteile im Vakuum bei 100 mbar während 10 Minuten abdestilliert. Nach Druckausgleich mit Stickstoff wird die Schmelze entleert, wobei nach dem Abkühlen 637 g eines spröden, pulverisierbaren Harzes erhalten werden. Es hat einen Erweichungspunkt von 135 °C. Eine 50%ige Lösung in Toluol hat bei 23 °C eine Viskosität von 2062, eine 25%ige Lösung von 5 mPa·s. Das durch Gelpermeationschromatographie ermittelte mittlere Molekulargewicht ergibt sich zu 13550. Die Reaktionszeit zur Herstellung beträgt 14 Stunden.

### Beispiel 1

### Herstellung eines erfindungsgemäßen Bindemittelharzes durch Azeotropdestillation mit der Rezeptur des Vergleichsbeispiels 1, wobei ein in Toluol hochviskoses Produkt mit verkürzter Reaktionszeit erhalten wird.

In einem heizbaren 2l-Mehrhalskolben mit Rührwerk, Thermometer, Tropftrichter, Rückflußkühler und Einfüllrohr werden unter einer Stickstoffatmosphäre 527 g handelsübliches Kolophonium, das auch als Naturharz oder Naturharzsäure bezeichnet wird, 58 g Nonylphenol, 63 g Diphenylolpropan und 48 g Glycerin geschmolzen. In die 100 °C heiße Schmelze werden sodann 8,8 g Calciumhydroxid, was einem Gehalt von 0,9 Gew.-% (berechnet als CaO) bezogen auf die Gesamteinwaage entspricht, suspendiert in 30 ml Xylol, getropft und dann 45 g Paraformaldehyd eingetragen. Dann wird die Mischung unter Rühren während 30 min homogenisiert. Dann wird die Heizung auf eine Temperatur von 130 °C geregelt, wobei Wasser im Rückflußkühler zu kondensieren beginnt. Nach 2 Stunden wird der Kühler mit einem Azeotropwasserabscheider kombiniert und Wasser im Umlauf mit Xylol abdestilliert. Dabei wird die Temperatur kontinuierlich auf 250 °C gesteigert, wobei bei Erreichen von 200 °C weitere 50 g Xylol zugegeben werden. Dabei wird Wasser ständig als Azeotrop mit Xylol abdestilliert. Der Fortgang der Reaktion wird anhand der Säurezahl des Produkts bestimmt. Sobald diese auf 25 mg KOH/g Harz gefallen ist, ist die Wasserabspaltung weitgehend beendet. Das in der Schmelze befindliche Lösungsmittel wird zunächst unter Normaldruck während 30 min abdestilliert. Flüchtige Anteile werden im Vakuum während 10 min bei 100 mbar abdestilliert. Nach Druckausgleich mit Stickstoff wird die Schmelze entleert, wobei nach dem Abkühlen 644 g eines spröden, pulverisierbaren Harzes erhalten werden. Es hat einen Erweichungspunkt von 150 °C. Eine 50%ige Lösung in Toluol weist bei 23 °C eine Viskosität von 182000, eine 25%ige Lösung eine Viskosität von 30 mPa·s auf. Das durch Gelpermeationschromatographie ermittelte mittlere Molekulargewicht beträgt 41500. Die Reaktionszeit zur Herstellung beträgt 8 Stunden.

### Beispiel 2

### Herstellung eines erfindungsgemäßen Bindemittelharzes mit der Rezeptur des Beispiels 1, wobei Calciumhydroxid durch die äquivalente Menge Zinkoxid ersetzt wird.

Es werden statt 8,8 g Calciumhydroxid 9,6 g Zinkoxid, was einem Gehalt von 1,3 Gew.-% bezogen auf die Gesamteinwaage entspricht, verwendet. Nach 8 Stunden Reaktionszeit werden 651 g eines spröden Harzes erhalten, das ab 145 °C zu erweichen beginnt. Eine 50%ige Lösung in Toluol besitzt eine Viskosität von 1310 mPa·s, eine 25%ige Lösung in Toluol eine Viskosität von 12 mPa·s. Das durch Gelpermeationschromatographie ermittelte Molekulargewicht beträgt 41020.

### Beispiel 3

### Herstellung eines erfindungsgemäßen Bindemittelharzes mit dem Verfahren des Beispiels 1, wobei mit einem Gemisch aus Calciumhydroxid und Zinkoxid gearbeitet wird.

Man verfährt wie in Beispiel 1 angegeben mit der Abänderung, daß statt 8,8 g Calciumhydroxid ein Gemisch aus 5 g Zinkoxid und 5 g Calciumhydroxid eingesetzt wird, was einem Gehalt von 1,2 Gew.-% bezogen auf die Gesamtrezeptur (berechnet als Oxid) entspricht. Das nach einer Reaktionszeit von 8 Stunden erhaltene Harz hat, 50%ig in Toluol gelöst, eine Viskosität von 1200 mPa·s, und 25%ig gelöst eine Viskosität von 9 mPa·s. Das durch Gelpermeationschromatographie ermittelte mittlere Molekulargewicht beträgt 27500.

### Vergleichsbeispiel 2

### Herstellung eines Bindemittelharzes mit Fumarsäure nach bekannten Verfahren nach Patentschrift US 4,857,624, wobei ein in Toluol hochviskoses Produkt mit verlängerter Reaktionszeit erhalten wird.

In einem heizbaren 2l-Mehrhalskolben mit Rührwerk, Thermometer, Tropftrichter, Rückflußkühler und Einfüllrohr werden unter einer Stickstoffatmosphäre 723 g handelsübliches Kolophonium geschmolzen und bei 160 °C 56,2 g Fumarsäure zugegeben. Nachdem die exotherme Reaktion abgeklungen ist, läßt man noch eine Stunde nachreagieren. Dann kühlt man auf 100 °C ab und fügt der Mischung 72,7 g Diphenylolpropan (Bisphenol A), 117 g Pentaerythrit, 0,6 g Magnesiumoxid und 29,4 g Paraformaldehyd zu. Dann wird die Mischung unter Rühren während 30 min homogenisiert. Dann wird die Heizung auf eine Temperatur von 130 °C geregelt, wobei Wasser im Rückflußkühler zu kondensieren beginnt. Nach 2 Stunden wird der Kühler durch einen absteigenden Kühler ersetzt und Wasser und Harzöl abdestilliert. Dabei wird die Temperatur auf 260 °C gesteigert und der Fortgang der Reaktion anhand der Säurezahl und der Viskositätsentwicklung des Produkts bestimmt. Sobald die Säurezahl auf 25 mg KOH/g Harz gefallen ist und die Viskosität einer 50%igen Lösung in Toluol bei 23 °C 1600 mPa·s erreicht hat, werden flüchtige Anteile im Vakuum bei 100 mbar während 10 min abdestilliert. Nach Druckausgleich mit Stickstoff wird die Schmelze entleert, wobei nach dem Abkühlen 890 g eines spröden, pulverisierbaren Harzes erhalten werden, das einen Erweichungspunkt von 145 °C hat und, 25%ig in Toluol gelöst, eine Viskosität von 8 mPa·s. Die Reaktionszeit zu seiner Herstellung beträgt 14 Stunden.

### Vergleichsbeispiel 3

### Herstellung eines Bindemittelharzes mit der Rezeptur und dem Verfahren des Beispiels 1, wobei Calciumhydroxid durch die äquivalente Menge Magnesiumoxid ersetzt wird.

Man verfährt wie in Beispiel 1 angegeben mit der Abänderung, daß 8,8 g Calciumhydroxid durch 4,8 g Magnesiumhydroxid ersetzt werden. Nach einer Reaktionszeit von 6 Stunden kristallisiert der Ansatz aus, wobei ein für die erfindungsgemäße Anwendung unbrauchbares Produkt erhalten wird, da es sich in Toluol nur noch ungenügend löst.

### Vergleichsbeispiel 4

### Herstellung eines toluollöslichen Bindemittelharzes mit Magnesiumoxid. Es wird ein Produkt mit schlechter Pigmentbenetzung erhalten.

Analog zu Beispiel 1 werden 527 g Kolophonium, 200 g Nonylphenol, 12 g Diphenylolpropan, 48 g Glycerin, 6 g Magnesiumoxid und 68 g Formaldehyd miteinander kondensiert. Nach 8 Stunden Reaktionszeit wird ein Produkt vom Schmelzpunkt 139 °C erhalten, das 25%ig in Toluol gelöst eine Viskosität von 18 mPa·s aufweist. Das durch Gelpermeationschromatographie ermittelte mittlere Molekulargewicht beträgt 17760.

### Beispiel 4

### Herstellung eines erfindungsgemäßen Bindemittelharzes durch Azeotropdestillation mit der Rezeptur des Beispiels 1, wobei jedoch die Resolbildung unter Druck erfolgt.

In einer heizbaren 2l-Metallapparatur mit Rührwerk, Thermometer, Tropftrichter, Rückflußkühler und Einfüllrohr werden unter einer Stickstoffatmosphäre 527 g handelsübliches Kolophonium, das auch als Naturharz oder Naturharzsäure bezeichnet wird, 58 g Nonylphenol, 63 g Diphenylolpropan und 48 g Glycerin geschmolzen. In die 100 °C heiße Schmelze werden sodann 8,8 g Calciumhydroxid, was einem Gehalt von 1,2 Gew.-% bezogen auf die Gesamteinwaage entspricht, suspendiert in 30 ml Xylol, getropft und dann 45 g Paraformaldehyd eingetragen. Dann wird die Mischung unter Rühren während 30 min homogenisiert. Dann wird die Apparatur druckdicht verschlossen und die Heizung auf eine Temperatur von 130 °C geregelt wobei sich ein Druck von bis zu 2 bar aufbaut. Nach 2 Stunden wird der Kühler mit einem Azeotropwasserabscheider kombiniert und Wasser im Umlauf mit Xylol abdestilliert. Dabei wird die Temperatur kontinuierlich auf 250 °C gesteigert, wobei bei Erreichen von 200 °C weitere 50 g Xylol zugegeben werden. Dabei wird Wasser ständig als Azeotrop mit Xylol abdestilliert. Der Fortgang der Reaktion wird anhand der Säurezahl des Produkts bestimmt. Sobald diese auf 25 mg KOH/g Harz gefallen ist, ist die Wasserabspaltung weitgehend beendet. Das in der Schmelze befindliche Lösungsmittel wird zunächst unter Normaldruck während 30 min abdestilliert. Flüchtige Anteile werden im Vakuum während 10 min bei 100 mbar abdestilliert. Nach Druckausgleich mit Stickstoff wird die Schmelze entleert, wobei nach dem Abkühlen 648 g eines spröden, pulverisierbaren Harzes erhalten werden. Es hat einen Erweichungspunkt von 152 °C. Eine 50%ige Lösung in Toluol weist bei 23 °C eine Viskosität von 241000, eine 25%ige Lösung eine Viskosität von 580 mPa·s auf. Das durch Gelpermeationschromatographie ermittelte mittlere Molekulargewicht beträgt 47800. Die Reaktionszeit zur Herstellung beträgt 8 Stunden.

### Beispiel 5

### Herstellung eines erfindungsgemäßen Bindemittelharzes, das zusätzlich zum Naturharz mit einem Kohlenwasserstoffharz modifiziert ist.

Es wird gearbeitet wie in Beispiel 2 mit der Abänderung, daß statt 527 g Kolophonium ein Gemisch aus 475 g Kolophonium und 52 g eines naturharzsäuremodifizierten Cyclopentadienharzes (Säurezahl 12 mg KOH/ g Harz, Jodzahl 197 g Jod/100 g Harz) eingesetzt werden. Das resultierende Produkt besitzt einen Erweichungspunkt von 120 °C und eine Säurezahl von 14 mg KOH/g Harz. Die Viskosität einer 25%igen Lösung in Toluol beträgt 14 mPa·s. Das durch Gelpermeationschromatographie ermittelte mittlere Molekulargewicht beträgt 19200, die Reaktionszeit 8 Stunden.

### Beispiel 6

### Herstellung eines erfindungsgemäßen Bindemittelharzes mit Tallharz als Naturharzkomponente und Pentaerythrit als Veresterungsmittel

600 g amerikanisches Tallharz, 33 g Nonylphenol, 87 g Diphenylolpropan, 61 g Pentaerythrit, 51 g Paraformaldehyd, 5 g Calciumhydroxid und 5 g Zinkoxid werden analog zu Beispiel 1, aber bei einer Veresterungstemperatur von 260 statt 250 °C umgesetzt. Nach 9 Stunden Reaktionszeit wird ein Harz vom Schmelzpunkt von 135 °C und einer Säurezahl von 36 mg KOH/ g Harz erhalten. Eine 25%ige Lösung des Harzes in Toluol weist eine Viskosität von 11 mPa·s auf.

### Beispiel 7

### Herstellung eines erfindugsgemäßen Bindemittelharzes, das in der Resolkomponente t-Butylphenol enthält

600 g Kolophonium, 39 g t-Butylphenol, 75 g Diphenylolpropan, 55 g Glycerin, 10 g Zinkoxid (entspricht einem Gehalt von 1,2 Gew.-%) und 51 g Paraformaldehyd werden gemäß Beispiel 1 kondensiert. Nach 8 Stunden Reaktionszeit werden 705 g Festharz vom Schmelzpunkt 138 °C erhalten. Eine 25%ige. Lösung in Toluol weist eine Viskosität von 5 mPa·s auf.

### Anwendungstechnischer Vergleich

Nach üblichen Verfahren wurden jeweils aus den Bindemittelharzen der Beispiele 1 (Farbe A) und 2 (Farbe B) sowie der Vergleichsbeispiele 1 (Farbe C), 2 (Farbe D) und 4 (Farbe E) durch Dispergieren einer Mischung von
15 g Bindemittelharz
9 g Pigment Litholrubin
76 g Toluol
Farben für den Illustrationstiefdruck mit Toluol hergestellt, mit der im Tiefdruckverfahren Papier bedruckt wurde.

Der Glanz der Andrucke, der für ein gutes drucktechnisches Ergebnis möglichst hoch sein sollte, wurde sodann mit dem Laborreflektometer nach Lange bei einem Einstrahlwinkel von 60° gemessen.

Das Durchschlagen der Farben auf die Rückseite des Bedruckstoffs, das für ein gutes drucktechnisches Verhalten möglichst schwach sein sollte, wurde visuell beurteilt.

| | | | | | |
|---|---|---|---|---|---|
| Farbe | A | B | C | D | E |
| Glanz[%] | 55 | 53 | 43 | 49 | 41 |
| Durchschlagen | schwach | schwach | stark | mittel | stark |

## Patentansprüche

1. Phenolharz-modifizierte Naturharzsäureester herstellbar durch Umsetzung von mindestens jeweils einer Verbindung aus den Substanzgruppen
A) Naturharze oder Naturharzsäuren
B) einkernige oder mehrkernige alkylolisierbare Phenole,
C) Aldehyde oder Aldehydacetale, und
D) aliphatische, cycloaliphatische oder araliphatische Alkohole mit mindestens zwei Hydroxylgruppen
in Gegenwart von
E) Calcium- und/oder Zinkverbindungen
sowie gegebenenfalls Verbindungen aus der Substanzgruppe
F) ethylenisch ungesättigte Kohlenwasserstoffharze
bei einer Temperatur von 100 bis 250 °C und anschließende azeotrope Abdestillation des Wassers mittels eines Schleppmittels bei 200 bis 300 °C.

2. Verfahren zur Herstellung von Phenolharz-modifizierten Naturharzsäureestern nach Anspruch 1 durch Umsetzung von
30 bis 95 Gew.-% Naturharze oder Naturharzsäuren aus der Substanzgruppe A),
1 bis 45 Gew.-% phenolische Komponenten aus der Substanzgruppe B) und
2 bis 20 Gew.-% Aldehydkomponenten aus der Substanzgruppe C)
oder anstelle der Komponenten aus den Substanzgruppen B) und C) oder anteilig mit diesen aus Verbindungen der Substanzgruppen B) und C) separat hergestellten Kondensationsprodukten in einer Phenolresolform,
1 bis 20 Gew.-% Polyolkomponenten aus der Substanzgruppe D),
0,01 bis 5 Gew.-%, berechnet als CaO und/oder ZnO, Calcium- und/oder Zinkverbindungen aus der Substanzgruppe E),
0 bis 30 Gew.-% Kohlenwasserstoffharzkomponenten aus der Substanzgruppe F) zusammen mit
0,01 bis 20 Gew.-% eines inerten Schleppmittels,
jeweils bezogen auf die Gesamtmenge der eingesetzten Komponenten.

3. Bindemittelharze für Druckfarben enthaltend Phenolharz-modifizierte Naturharzsäureester gemäß Anspruch 1 und Zusätze ausgewählt aus Kolophonium, Kolophoniumester, vegetabilen Ölen und Phenolharzen, Polyester, Alkydharzen, Acrylpolymeren, Polystyrol, modifizierte Kieselgelen und modifizierten Cellulosederivaten oder deren Mischungen.

4. Verwendung der Phenolharz-modifizierten Naturharzsäureester als Bindemittelharze in Druckfarben für den Illustrationstiefdruck.
